**Europäisches Patentamt**

**European Patent Office**

**Office européen des brevets**

(19)

(11) Veröffentlichungsnummer: **0 181 949**
**B1**

(12) ## EUROPÄISCHE PATENTSCHRIFT

(45) Veröffentlichungstag der Patentschrift:
**18.01.89**

(51) Int. Cl.⁴: **B 41 J 29/38,** B 41 J 5/44

(21) Anmeldenummer: **84113711.0**

(22) Anmeldetag: **14.11.84**

(54) Drucker, insbesondere Matrixdrucker.

(43) Veröffentlichungstag der Anmeldung:
**28.05.86 Patentblatt 86/22**

(45) Bekanntmachung des Hinweises auf die Patenterteilung:
**18.01.89 Patentblatt 89/3**

(84) Benannte Vertragsstaaten:
**AT BE DE FR GB IT NL SE**

(56) Entgegenhaltungen:
**DE-A- 2 517 555**
**DE-A- 3 009 001**
**DE-A- 3 037 480**
**US-A- 4 218 760**
**US-A- 4 412 300**

**PATENTS ABSTRACTS OF JAPAN, Band 6, Nr. 129 (P-128)[1007], 15. Juli 1982; & JP - A - 57 52975 (CANON K.K.) 29.03.1982**

(73) Patentinhaber: **Mannesmann Tally Ges. mbH, Zetschegasse 17, A-1232 Wien (AT)**

(72) Erfinder: **Hille, Robert, Kl. Neug.15/19/5, A-1050 Wien (AT)**
Erfinder: **Völkert, Josef Wolfgang, Laaerbergerstrasse 36, A-1100 Wien (AT)**
Erfinder: **Vlaschits, Günther, Gallgasse 23/3/6, A-1130 Wien (AT)**

(74) Vertreter: **Flaig, Siegfried, Dipl.-Ing. (FH), Mannesmann AG Mannesmannufer 2, D-4000 Düsseldorf (DE)**

## Beschreibung

Die Erfindung betrifft einen Drucker, insbesondere einen Matrixdrucker, dessen Gehäuse eine Druckmechanik, eine Ansteuerungselektronik bzw. ein Betriebssystem umschliesst, wobei eine abklappbare Abdeckung zumindest für den Bereich der Druckmechanik vorgesehen ist und unter der abklappbaren Abdeckung ein Sensor für die Abschaltung der Druckmechanik in Offenstellung der Abdeckung vorgesehen ist (DE-A-3009001).

Ein derartiger Drucker bildet z.B. einen Nadeldrucker, Tintenstrahldrucker, einen Thermodrucker, einen Typenraddrucker, einen Laserdrucker o.ä. Der Drucker besitzt eine Schnittstelle für den Anschluss an eine elektronische Datenverarbeitung, eine Steuereinheit mit Zwischenspeicher und einen Zeichengenerator, einen Netzteil und eine Antriebselektronik für die Druckelemente, ausserdem ein Druckwerk mit den Druckelementen, ferner einen Farbträger und einen Papiertransport.

Mit Druckern, die nach dem Matrixdruckverfahren arbeiten, also serielle Drucker oder Zeilendrucker, lassen sich unterschiedliche Schriftarten, Schriftgrössen, Schriftqualitäten und Schreibgeschwindigkeiten erzeugen. Bei entsprechender Anordnung der Druckelemente (in einer oder mehreren Spalten bzw. in einer horizontalen Zeile) vermindert oder erhöht sich der elektronische Aufwand. In jedem Fall ist eine Steuereinheit erforderlich, die den Abdruck der Druckelemente auf dem Aufzeichnungsträger, d.h. die Zeichenbildung in Zeilen und Spalten steuert. Auch Grafik-Darstellungen und mehrfarbige Schriften sind beim Einsatz entsprechender Farbbänder herstellbar.

Die «Bandbreite» des Druckers besteht daher aus unterschiedlichen Zeichenarten , Schriftbildern, wie z.B. Italic-, Pico-, Elite-, Pica-Schrift, unterschiedlichen Zeichenhöhen, Zeichenbreiten (Anzahl der Schriftzeichen pro Zoll), Schönschrift, Schnellschrift, Zeichenhervorhebungen, Unterstreichungen, Sub- und Superscript, automatischem Randausgleich, automatischer Zentrierung, Proportionalschrift, Schattenschrift, verschiedenen -Zeichenabständen, wissenschaftlichen Texten (Formeln und Klammern), Zeichensätze fremder Sprachen, Sonderzeichen der technisch-wissenschaftlichen Sprachen, mathematischer Sprachen, spezieller Programmiersprachen, Graphik-Darstellungen, Bilddarstellungen u. dgl.

Es versteht sich von selbst, dass ein einzelner Drucker nicht alle Eigenschaften bzw. Funktionen aufweisen kann, zumal innerhalb eines Druckers die Anordnung von noch mehr Leiterplatten und elektrischen Elementen auf besondere Schwierigkeiten stösst. So ist eine Überbelegung des Innenraums nachteilig wegen der entstehenden Verlustwärme elektrischer Widerstandselemente, die sich insbesondere auf Halbleiterbauelemente, wie z.B. Transistoren und Dioden schädlich auswirkt.

Es ist aus der US-A-4412300 bekannt, einen programmierbaren Rechner mit Einsteck-Ausnehmung am Gehäuse für ROM-Modulkassetten zu versehen. Das Einstecken der Modulkassetten bewirkt jedoch lediglich den Anschluss des betreffenden Moduls an den zugehörigen Schaltkreis. Das Einsetzen von Modulkassetten dient demzufolge hier dem Einlesen von unterschiedlichen Programmen in den Rechner.

Es ist ausserdem aus der DE-A-3009001 bekannt, einen Drucker mittels einer durchsichtigen Platte abzudecken. Diese Platte besitzt an ihrer Unterseite Papierführungselemente sowie eine Schalterbetätigungsnase. Im aufgelegten und verriegelten Zustand der Platte drückt diese Schalterbetätigungsnase auf den Stössel eines Mikroschalters, so dass das Gerät beim Abnehmen der Platte ausgeschaltet wird. Weitere Funktionen eines Druckers sind dadurch nicht betroffen.

Der Erfindung liegt die Aufgabe zugrunde, den Anwendungsbereich eines Druckers, und zwar aktiv und passiv erheblich zu erweitern.

Die gestellte Aufgabe wird bei einem eingangs bezeichneten Drucker erfindungsgemäss dadurch gelöst, dass ein Seitenteil des Druckergehäuses mit einem Abteil für auswechselbare Programmkassetten ausgestattet ist und dass die Abdeckung für das Abteil der Programmkassetten den übrigen Druckerbereich nicht überdeckt. Diese auswechselbaren Programmkassetten erlauben für alle aufgezählten Funktionsarten der «Bandbreite» eines Druckers gesonderte Software nach Belieben einzuführen, für die ein Drucker normalerweise nicht ausgestattet werden kann (aktive Erweiterung des Anwendungsbereichs). Vorteilhaft ist ausserdem die Anwendung besonderer Testprogramme für die einzelnen Funktionen des Druckers selbst (passive Erweiterung des Anwendungsbereiches). Von Vorteil ist jedoch auch, dass der Programmkassettenwechsel vom Benutzer ohne Gefahr einer falschen Betätigung von Betriebsschaltern ausgeführt werden kann. Nach Abheben der abklappbaren Abdeckung ist eine Betätigung von Tasten ohne jede Wirkung auf die jeweiligen Schaltkreise.

Der praktische Anwendungbereich des Druckers kann wirtschaftlich dadurch erweitert werden, indem die Programmkassetten Software für unterschiedliche Schriftarten, die auf dem Drucker geschrieben werden, enthalten. Währenddem es unmöglich gewesen wäre, bei einer Schreibmaschine nach dem Typenanschlagsystem eine Schrift, z.B. Perlschrift, in Pico-Schrift zu wechseln, genügt hier als einfache, für jeden Benutzer durchführbare Massnahme der Kassettenwechsel oder die Anwahl einer anderen Kassette.

Von erheblicher praktischer Bedeutung ist ausserdem, dass die auswechselbaren Programmkassetten als Software unterschiedliche Betriebssysteme oder Teile davon enthalten. Solche Betriebssysteme können z.B. beim Wechsel von der einen Schriftart in eine andere Schriftart vorteilhaft sein.

Die Fähigkeiten des Druckers werden ausserdem dadurch erweitert, dass die auswechselbaren Programmkassetten Zusatzspeicher oder zumindest einen Co-Prozessor aufweisen.

Der Umfang der zur Verwendung bereitstehenden Programmkassetten kann grösstmöglich gehalten werden, indem das Abteil für die auswechselbaren Programmkassetten aus mehreren von der Bedienerseite aus gesehen hintereinander angeordneten Einschuböffnungen besteht.

Der Wechsel wird vorteilhafterweise dadurch erleichtert, dass die Programmkassette ein sich nach unten erstreckendes Gehäuse aufweist, an dem an der Oberseite eine Leiste als Handgriff vorgesehen ist.

In der Zeichnung ist ein Ausführungsbeispiel schematisch dargestellt und wird im folgenden näher erläutert. Es zeigen:

Fig. 1 eine Draufsicht auf einen Drucker im Bedienungsbereich und

Fig. 2 eine Programmkassette in perspektivischer Ansicht von aussen,

Fig. 3 ein Funktionsdiagramm zu einer Programmkassette.

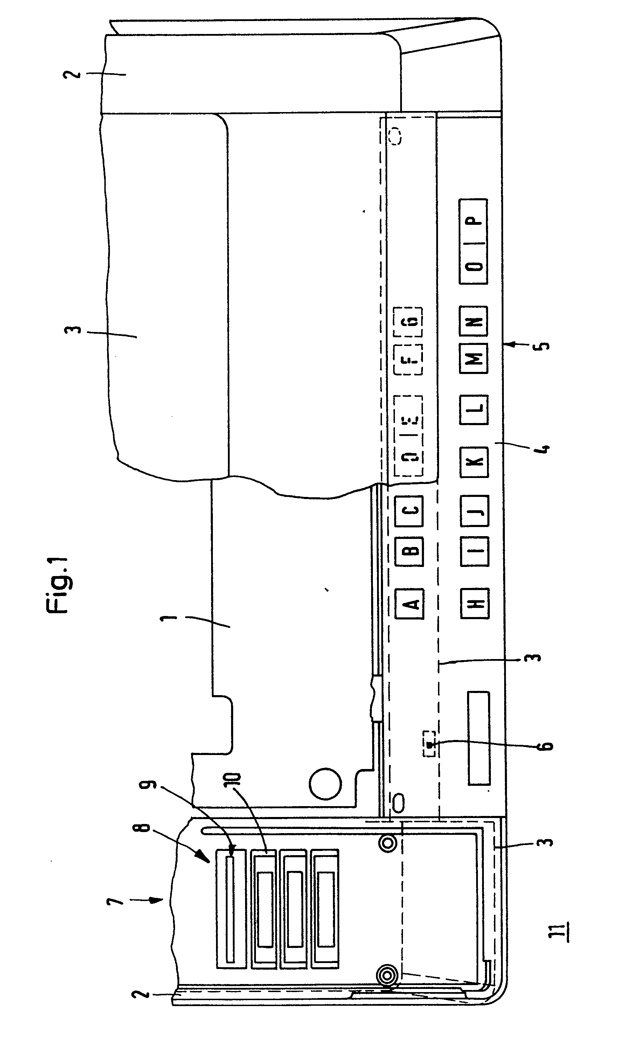

Als Ausführungsbeispiel ist ein Matrixdrucker dargestellt, dessen Druckmechanik 1 im Druckergehäuse 2 nur angedeutet ist. Das Druckergehäuse 2 umschliesst ferner alle Elektronikbaugruppen, wie z.B. eine Ansteuerungselektronik bzw. Betriebssysteme. Eine abklappbare Adeckung 3 ist rechts in Fig. 1 voll dargestellt und links aufgebrochen gezeichnet. Die Abdeckung 3 liegt auf dem Tastenfeld 4 des Bedienerpultes 5 auf.

Unter der abklappbaren Abdeckung 3 befindet sich ein Sensor 6, der z.B. aus einem magnetisch empfindlichen Hallsensor bestehen kann, der durch die geschlossene Abdeckung 3 ausgeschaltet ist. Während der Ausschaltzeit befindet sich die Druckmechanik 1 in Betriebsbereitschaft. Im Seitenteil 7 des Druckergehäuses 2 ist ein Abteil 8 für auswechselbare Programmkassetten 9 vorgesehen. Die Abdeckung 3 überdeckt hier sowohl die Druckmechanik 1 als auch den Seitenteil 7 des Druckergehäuses 2. Aus diesem Grund kann der Sensor 6 im Bereich des Tastenfeldes 4 liegen.

Für die unterschiedlichen Programmkassetten 9 sind Einschuböffnungen 10 von der Bedienerseite 11 gesehen hintereinander angeordnet. Die Einschuböffnungen 10 können unterschiedlich durch Grösse, Formgestaltung, wie z.B. Nasen, Vorsprünge, u.dgl. sein, um Verwechslungen der Programmkassetten mit absoluter Sicherheit zu vermeiden, wobei die Programmkassetten Magnetbänder mit Software für unterschiedliche Schriftarten, Betriebssysteme u. dgl. enthalten.

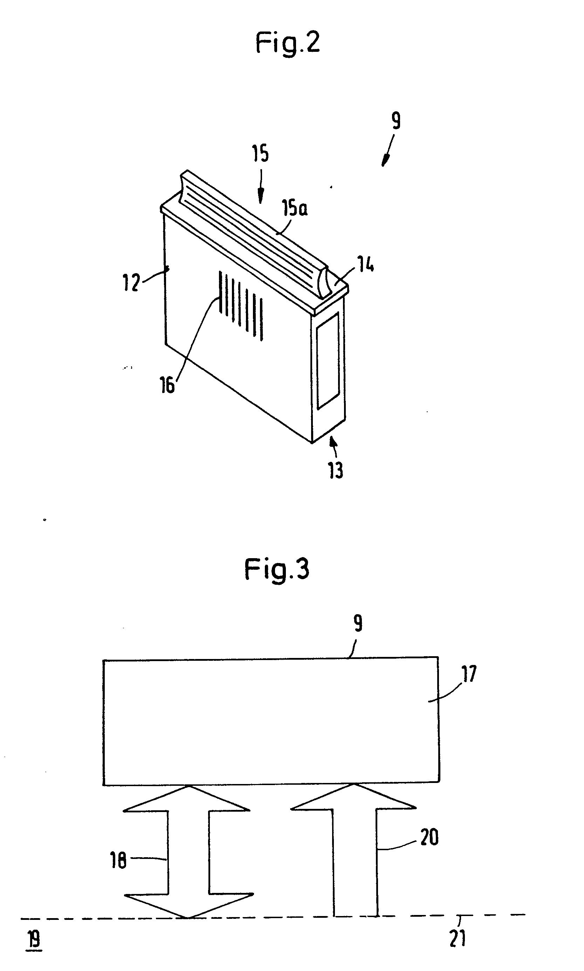

Jede Programmkassette 9 weist an der Unterseite 13 des Gehäuses 12 eine Buchsenleiste 21 (Fig.3) auf, mit der der elektrische Anschluss zur Druckerelektronik hergestellt ist, sobald das Gehäuse 122 in Betriebsstellung gebracht ist. An der Oberseite 14 ist als Handgriff 15 eine Leiste 15a befestigt, um die Handhabung für ein exaktes Einsetzen der Programmkassette 9 zu erleichtern. Entstehende Wärme aus dem Drucker wird durch Luftschlitze 16, die an den Seitenwänden des Gehäuses 12 eingearbeitet sind, abgeführt.

In Fig. 3 sind die Funktionsbereiche einer Programmkassette 9 dargestellt, um zu zeigen, dass eine Programmkassette 9 beliebig mit Software irgendwelcher Art beschrieben sein kann. So ist es möglich, ein oder zwei Arbeits- oder Programmspeicher 17 vorzusehen. Die Daten werden über den Datenbus 18 der Druckerelektronik 19 zugeleitet bzw. von der Druckerelektronik 19 zurückgeleitet. Ausserdem ist ein separater Adress- und Kontrollbus 20 vorgesehen. Die Programmkassette 9 wird über die Buchsenleiste 21 mit der Druckerelektronik 19 verbunden.

Für den Fall, dass in einer Programmkassette Zeichensätze, Printoptionen, Betriebssysteme oder Teile davon gespeichert sind, enthält die Programmkassette einen oder mehrere Fixspeicher (der Speichertypen ROM, EPROM oder EEPROM).

Die Programmkassetten 9 können jedoch ebenso Arbeitsspeicher enthalten z.B. für die Verwendung als Zeichenpuffer oder als Speicher für einen geladenen Zeichensatz (sog. download font). Die Speichertype ist hier ein RAM.

Sogar die Kombination der beiden Speichertypen in einer Programmkassette 9 ist möglich.

Der Datenbus 18 zur Druckerelektronik 19 ist ein Microprozessorbus, dessen elektrische Verbindung über die lösbare Buchsenleiste 21 erfolgt. Die Anwahl der gewünschten Programmkassette 9 erfolgt über Steuercode von der Schnittstelle oder über das Bedienermenü. Die Verwendung mehrerer Programmkassetten 9 kann simultan erfolgen, wodurch die Fähigkeiten des Druckers wesentlich gesteigert werden.

**Patentansprüche**

1. Drucker, insbesondere Matrixdrucker, dessen Gehäuse (2) eine Druckmechanik (1), eine Ansteuerungselektronik bzw. ein Betriebssystem umschliesst, wobei eine abklappbare Abdeckung (3) zumindest für den Bereich der Druckmechanik (1) vorgesehen ist und unter der abklappbaren Abdeckung (3) ein Sensor (6) für die Abschaltung der Druckmechanik (1) in Offenstellung der Abdeckung (3) vorgesehen ist, dadurch gekennzeichnet, dass ein Seitenteil (7) des Druckergehäuses (2) mit einem Abteil (8) für auswechselbare Programmkassetten (9) ausgestattet ist und dass die Abdeckung (3) für das Abteil (8) der Programmkassetten (9) den übrigen Druckerbereich mitüberdeckt.

2. Drucker nach Anspruch 1, dadurch gekennzeichnet, dass die Programmkassetten (9) Software für unterschiedliche Schriftarten, die auf dem Drucker geschrieben werden, enthalten.

3. Drucker nach den Ansprüchen 1 und 2, dadurch gekennzeichnet, dass die auswechselbaren Programmkassetten (9) als Software unterschiedliche Betriebssysteme oder Teile davon enthalten.

4. Drucker nach de Ansprüchen 1 bis 3, dadurch gekennzeichnet, dass die auswechselbaren Programmkassetten (9) Zusatzspeicher (RAM) oder zumindest einen Co-Prozessor aufweisen.

5. Drucker nach den Ansprüchen 1 bis 4, dadurch gekennzeichnet, dass das Abteil (8) für die auswechselbaren Programmkassetten (9) aus mehreren von der Bedienerseite (11) aus gesehen hintereinander angeordneten Einschuböffnungen (10) besteht.

6. Drucker nach den Ansprüchen 1 bis 5, dadurch gekennzeichnet, dass die Programmkassette (9) ein sich nach unten erstreckendes Gehäuse (12) aufweist, an dem an der Oberseite (14) eine Leiste (15 a) als Handgriff (15) vorgesehen ist.

## Claims

1. A printer, in particular a matrix printer, the casing (2) of which comprises a printing mechanism (1), an electronic control means or an operating system, wherein a fold-down cover (3) is provided, at least for the region of the printing mechanism (1), and a sensor (6) for switching off the printing mechanism (1) when the cover (3) is in the open position is provided beneath the fold-down cover (3), characterised in that a side member (7) of the printer casing (2) is equipped with a compartment (8) for exchangeable program cassettes (9) and in that the cover (3) for the compartment (8) for program cassettes (9) also covers the other region of the printer.

2. A printer according to claim 1, characterised in that the program cassettes (9) contain software for different character fonts which are typed by the printer.

3. A printer according to claims 1 and 2, characterised in that the exchangeable program cassettes (9) contain different operating systems or parts thereof as software.

4. A printer according to claims 1 to 3, characterised in that the exchangeable program cassettes (9) have supplementary memories (RAM) or at least one co-processor.

5. A printer acscording to claims 1 to 4, characterised in that the compartment (8) for the exchangeable program cassettes (9) consists of several slide-in openings (10) arranged in succession, as viewed from the operator side (11).

6. A printer according to claims 1 to 5, characterised in that the program cassette (9) has a downwardly extending casing (12) provided on its upper side (14) with a strip (15 a) as handle (15).

## Revendications

1. Imprimante, notamment imprimante à matrice, dont le carter (2) enferme une mécanique d'impression (1), une électronique de commande ou un système d'exploitation, un couvercle rabattable (3) étant prévu au moins pour la zone de la mécanique d'impression, et un détecteur (6) étant prévu sous ce couvercle rabattable (3) pour mettre hors circuit la mécanique d'impression (1) lorsque ce couvercle (3) est ouvert, imprimante caractérisée en ce qu'une partie latérale (7) du carter (2) de l'imprimante est équipée d'un compartiment (8) destiné à recevoir des cassettes de programmation interchangeables (9), tandis que le couvercle (3) pour le compartiment (8) des cassettes de programmation (9) recouvre également la partie restante de l'imprimante.

2. Imprimante selon la revendication 1, caractérisée en ce que les cassettes de programmation (9) contiennent des logiciels pour différents types de caractères qui sont enregistrés sur l'imprimante.

3. Imprimante selon les revendications 1 et 2, caractérisée en ce que les cassettes de programmation interchangeables (9) contiennent sous forme de logiciels différents systèmes d'exploitation ou des parties de ceux-ci.

4. Imprimante selon les revendications 1 à 3, caractérisée en ce que les cassettes de programmation interchangeables (9) comportent des mémoires supplémentaires (RAM) ou tout au moins un co-processeur.

5. Imprimante selon les revendications 1 à 4, caractérisée en ce que le compartiment (8) pour les cassettes de programmation interchangeables (9) est constitué par plusieurs orifices d'insertion (10), qui sont disposés les uns derrière les autres lorsqu'ils sont vus du côté de l'opération (11).

6. Imprimante selon les revendications 1 à 5, caractérisée en ce que chaque cassette de programmation (9) comporte un boîtier (12) s'étendant vers le bas et sur le côté supérieur duquel est prévue une barrette (15 a) jouant le rôle de poignée (15).

Fig.1

# Fig.2

# Fig.3